Europäisches Patentamt

(19) European Patent Office

Office européen des brevets

(11) Publication number: **0 059 177**
**A2**

(12) # EUROPEAN PATENT APPLICATION

(21) Application number: **82850031.4**

(22) Date of filing: **19.02.82**

(51) Int. Cl.³: **E 04 C 3/29**

(30) Priority: **19.02.81 SE 8101124**

(43) Date of publication of application: **01.09.82**
**Bulletin 82/35**

(84) Designated Contracting States: **AT BE CH DE FR GB IT LI NL SE**

(71) Applicant: **Nielsen, Hilmar Rasmus, Forvägen 7, S-145 51 Norsborg (SE)**

(72) Inventor: **Nielsen, Hilmar Rasmus, Forvägen 7, S-145 51 Norsborg (SE)**

(74) Representative: **Burman, Tore et al, Bergling & Sundbergh AB P.O.Box 7645, S-103 94 Stockholm (SE)**

(54) **Building component.**

(57) A building component includes at least two opposing longitudinal sheet metal profiles and a cohering plastics material arranged therebetween. Seen in the cross-section of the component, each profile is folded inwards along each of its longitudinal edges to at least about 180°, without the edges coming into direct contact against the central portion of the profile, to form two longitudinal flanges. These extend into the plastics material and are firmly anchored therein by their shape.

EP 0 059 177 A2

## BUILDING COMPONENT

The present invention relates to elongate building components, built up from at least two opposing longitudinal sheet metal profiles and a cohering plastics material arranged between them.

Building components of conventional type, i.e. made from timber traditionally available, primarily pine and spruce, normally fulfil their function well in different building structures, but are burdened with drawbacks even so. Thus, with increasing rationalization in the building art there are difficulties in drying the timber for a sufficiently long time, so that when it has been put in place it does not move in an unacceptable manner, i.e. warp, with accompanying inconvenience. Furthermore, timber is associated with the disadvantage that its price has heavily increased during recent years.

Against this background there is thus a demand for other types of building components which can replace the conventional components based on timber.

The present invention thus has the object of providing a building component which is not associated with the disadvantages of the conventional building components and which can also be produced at competitive prices. Another object of the invention is to provide a building component which can be manufactured from easily available raw materials.

For these and other purposes, it has been found in conjunction with the birth of the invention that a very utilizable building component can be produced, starting from at least two sheet metal profiles and a cohering plastics material arranged between them, each sheet metal profile in cross-section having both its longitudinal edges folded inwards to at least about

180° without said edges coming into direct contact with the central portion or web of the profile. There are formed two longitudinal flanges extending into the plastics material, which by their form are thus firmly anchored therein.

In a preferred embodiment of the building component in accordance with the present invention, the cross-section of the component has the form of a right-angled parallel-epiped, where two of the opposing sides are formed by the webs or central portions of the profiles, while the other two opposing sides are only partially formed by the flanges of the profiles, the remainder of these two sides being formed by the plastics material.

In a particularly preferred embodiment of the building component in accordance with the invention, each flange, seen in cross-section, is formed in three parts which are normal to each other, where the outmost part is normal to the web of the profile and terminates at some distance from it.

Seen in cross-section, the component in accordance with the invention may have a square or rectangular shape, in the latter case the profiles suitably forming edge surfaces, so as to avoid thermal bridges when the component is generally used in building structures.

The plastics material arranged between the profiles is suitably a hard foamed plastics, and here it is preferred that the material is foamed up in situ between the profiles in conjunction with producing the component.

As starting material for the hard foamed plastics used as plastics material may be used any of the conventional materials such as polystyrene, polyurethane, polyepoxy plastics, polyethene, polyvinylchloride, cellulose acetate, phenol and carbamide resins or silicon plastics. Foaming may take place conventionally by using a foaming agent. With regard to the fact that high strength is desirable it is preferred that a foamed plastics having a closed cell structure, consisting of so-called "integrated foam" is used. A specially preferred foamed plastics is hard polyurethane foam, which can be produced while using a halogenated hydrocarbon as a foam-forming agent, for example.

The material in the profiles incorporated in the building component is preferably sheet metal, e.g. sheet steel, galvanized sheet steel, aluminium or the like. In appropriate cases, the profiles can also be made from some other material, however, e.g. hard plastics. If sheet metal is used as material in the profiles, its thickness can vary from some tenths of a millimeter up to around one millimeter. A preferred thickness is, however, within the range of about 0.25 - 0.75 mm.

The invention will now be described in detail with the aid of a non-limiting example, while referring to the accompanying drawing, on which:

Figure 1 is a perspective view of a building component made in accordance with the invention,

Figure 2 is a cross-section to a larger scale of the component in Figure 1,

Figure 3 is similarly a cross-section of the profile incorporated in the component, and

Figure 4 is a schematic illustration, partly in cross-section, of a plant for continuously producing the building component in accordance with the invention.

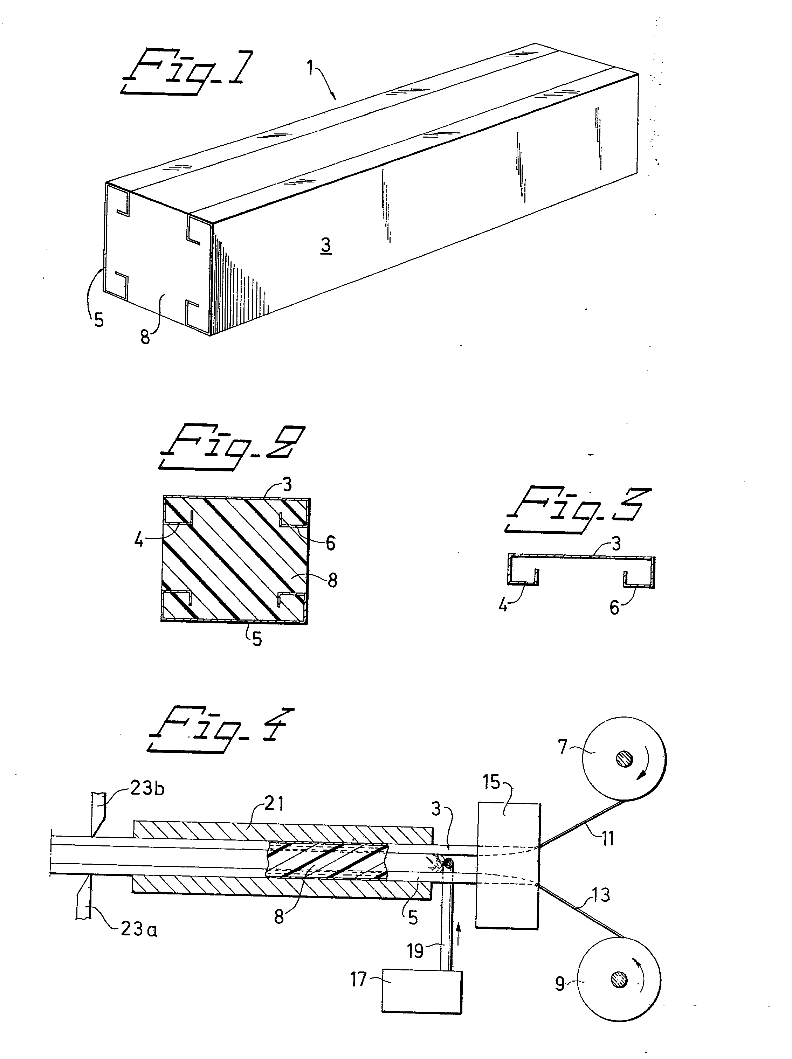

The building component in accordance with the invention, illustrated in Figure 1, is generally denoted by the numeral 1 and comprises two opposing profiles 3, 5 cohered by the plastics material 8, which is suitably a so-called "integrated foam".

The enlarged cross-section of the component according to Figure 1, which is shown in Figure 2, illustrates in detail the form of the profiles 3, 5. For the sake of clarity, only one profile 3 is illustrated in Figure 3, where the shape of the flanges 4, 6 may be seen.

It will be seen from Figure 2 that the shape of the flanges 4, 6, i.e. the folding of the edges by more than 270°, results in that the profiles 3, 5 are inseparably united with the plastics material 8 cohering the building component.

A plant is schematically illustrated in Figure 4 for the continuous production of the component 1 illustrated in Figures 1 and 2. The component is produced by starting from two sheet strips 11, 13 supplied from storage rolls 7, 9. Both strips 11, 13 are taken through a folding means 15, illustrated schematically, and entirely of conventional construction. The strips 11, 13 are folded in the means 15 to a shape corresponding to that of the profiles 3, 5.

After exiting from the folding means 15, the ready-shaped profiles 3, 5 are led into a moulding station 21, where they are surrounded on all sides by means placed correspondingly to the outer faces of the building component 1.

With the aid of an arrangement for supplying foamable polymer composition 17, such composition is supplied via a feed pipe 19 to the space between the profiles 3, 5 before entry into the moulding station 21. During the passage of the profiles 3, 5 through the moulding station 21, the composition is polymerized while an excess pressure is generated, the profiles 3, 5 thus being brought into engagement against the surrounding mould sections.

The moulding station 21 can be provided with heating means, e.g. such as are based on

5 0059177

electric resistance heating, if this is necessary for suitable polymerization forming a strong plastics foam 8.

After exiting from the moulding station 21, the ready component can be cut into suitable lengths with the aid of a cutting means 23a, 23b, illustrated schematically in the Figure and arranged with a reciprocating travel, where the forward travel is synchronous with the forward feed rate of the component.

With the aid of the plant shown in Figure 4, the building component in accordance with the invention can thus be easily produced continuously, and in optional, desired lengths.

The advantages of the building component in accordance with the invention are many. Thus, the component can be produced at a comparatively low price and be made with any cross-section and any desired length. Furthermore, thermal bridges generally occurring in building structures are avoided by the use of the component, since the metal-covered sides are facing outwards and inwards in the structure, the intermediate plastics material 8 serving as insulation. The component in accordance with the invention also has very good strength, and can be used in long unsupported lengths.

It should be noted that the invention is not limited to the embodiment shown above, but can be modified in several respects within the scope of the invention. Thus the flanges 4, 6 can be formed in a multitude of ways as long as they are folded at least about $180^{\circ}$ for anchoring in the plastics material. Furthermore, the cross-sectional form of the building component can be varied arbitrarily.

PATENT CLAIMS:

1. An elongate building component including at least two opposing longitudinal sheet metal profiles (3, 5) and a plastics material (8) arranged coheringly between them, characterized in that as seen in cross-section, each of the profiles (3, 5) is folded inwards along both longitudinal edges 'to at least about 180°, without direct contact against the central portion of the profile, to form two longitudinal flanges (4, 6) extending into the plastics material (8) and by their shape being firmly anchored therein.

2. Component as claimed in claim 1, characterized in that cross-sectionally it has the form of a right-angled parallel-epiped, where two of the opposing sides are formed by the webs of the profiles (3, 5) while the other opposing sides are only partially formed by said flanges (4, 6), the remaining portions of these sides being formed by the plastics material (8).

3. Component as claimed in claim 1 or 2, characterized in that each flange (3, 5), seen in cross-section, is built up in three parts mutually at right angles, where the outmost part extends at right-angle to the web of the profile (3, 5) and terminates at a distance therefrom.

4. Component as claimed in any of the preceding claims, characterized in that the plastics material (8) consists of hard, foamed plastics.

5. Component as claimed in claim 4, characterized in that the foamed plastics (8) has been foamed in situ between the profiles (3, 5).

6. Component as claimed in any of the preceding claims, characterized in that in cross-section it has quadratic shape.

7. Component as claimed in any of claims 1-5, characterized in that it has a rectangular shape in cross-section, the profiles forming edge surfaces.

_Fig.1_

_Fig.2_

_Fig.3_

_Fig.4_